# EUROPÄISCHE PATENTANMELDUNG

(11) **EP 2 177 851 A1**
(43) Veröffentlichungstag der Anmeldung: **21.04.2010**
(21) Anmeldenummer: 08105603.8
(22) Anmeldetag: 20.10.2008
(51) Int. Cl.: F25D 31/00, A23L 3/015

(54) **Vorrichtung und Verfahren zur Vakuumkühlung mit Mittel zur Rückgewinnung von Energie**

(71) Anmelder: Spirig Engineering GmbH, 9445 Rebstein (CH)
(72) Erfinder: Spirig, Kurt, 9444 Diepoldsau (CH)
(74) Vertreter: Hepp, Dieter

(57) **Zusammenfassung**

Es wird eine Vorrichtung und ein Verfahren zur Vakuumkühlung eines abzukühlenden Guts gezeigt. Die Erfindung umfasst eine Vakuumkammer (1) mit mindestens einer Absaugöffnung (2) und mindesten einem Vakuumpumpenanschluss, wobei die Vorrichtung mindestens ein Mittel (3,13) zur Rückgewinnung von Energie umfasst. Im Verfahren wird die dem Kühlgut entzogene Wärme einem Mittel zur Rückgewinnung von Energie zugeführt.

## Beschreibung

Die Erfindung betrifft eine Vorrichtung und ein Verfahren zur Vakuumkühlung mit einem Mittel zur Rückgewinnung von Energie gemäss Oberbegriff der unabhängigen Patentansprüche.

Vakuumkühlung findet ein breites Anwendungsgebiet in der Verarbeitung von Lebensmitteln. Besonders in der Backbranche hat sie sich aus wirtschaftlichen und qualitativen Gründen durchgesetzt. Zu den wirtschaftlichen Vorteilen wie der Einsparung von Zeit beim Abkühlen von Backwaren kommen bei der Vakuumkühlung noch erhebliche qualitative Vorteile hinzu wie z.Bsp. die Stabilisierung der Kruste, ein schonendes fertig Backen der Krume und Vorteile in der Produkthygiene (Reduktion der Keimzahl).

Der Prozess der Vakuumkühlung beruht auf der Tatsache, dass bei sinkendem Druck der Siedepunkt von Wasser abnimmt. Dies führt zur Verdunstung von Wasser in dem zu kühlenden Gut. Die Verdunstungsenergie (Enthalpie) wird dem Produkt entzogen und es erfolgt eine Kühlung.

Obschon die Einführung der Vakuumkühlung für Backgut bereits eine Energieersparnis bewirkt hat - die Backzeit im Ofen konnte gesenkt werden - ist der Prozess nach wie vor energetisch aufwändig.

Seit der Erfindung des Vakuumkühlverfahrens für Backgut vor ungefähr 50 Jahren waren energetische Überlegungen stets einer der wichtigsten Treiber. Insbesondere das Backen selbst stellt einen äusserst energieaufwändigen aber unverzichtbaren Prozess dar.

Bereits ist es gelungen, durch das Vakuumkühlen die Verbleibzeit der Brote im Backofen zu reduzieren, was sich positiv auf die Energiebilanz auswirkt. Die nachgelagerten Prozesse, Auskühlung, Verpackung und Verkauf/Transport zu optimieren, ist deshalb für die Industrie von höchstem Interesse.

EP 1161873 A1 versucht, die Energieaufwendungen für die Vakuumkühlung zu reduzieren, indem Adsorptionsmittel eingesetzt werden. Diese Adsorptionsmittel ermöglichen den Einsatz einer kleineren Vakuumpumpe mit geringerer Leistung. Allerdings ergibt sich der Nachteil, dass das Adsorptionsmittel früher oder später regeneriert werden muss - mit den entsprechenden Kosten- und Energieaufwendungen.

In DE 19702674 A1 wird eine Energieeinsparung dadurch bewirkt, dass das zu kühlende Gut in Förderkörben durch verschiedene Druckzonen geführt wird. Die Druckzonen sind mit separaten Kondensationseinrichtungen verbunden, welche in einer Art Parallelschaltung funktionieren und somit eine geringere Pumpenleistung durch Verdichtung des wasserdampfhaltigen Gases ermöglichen sollen. Diese Lösung hat den Nachteil, nicht für Backstuben mit geringen Raumvorgaben geeignet zu sein. Die Beschickung gestaltet sich zudem sehr aufwändig, da das Kühlgut in die Förderkörbe eingebracht werden muss. Auch ist Energie zur Bewegung der Förderkörbe nötig.

Es ist eine Aufgabe der vorliegenden Erfindung, die Probleme des Stands der Technik zu beheben. Insbesondere soll eine energie- und kosteneffiziente Vorrichtung und ein ebensolches Verfahren bereitgestellt werden.
Die Aufgabe wird durch eine Vorrichtung und ein Verfahren zur Vakuumkühlung eines abzukühlenden Guts, gemäss dem kennzeichnenden Teil der unabhängigen Ansprüche gelöst.

Ein Aspekt der vorliegenden Erfindung sieht eine Vorrichtung zur Vakuumkühlung eines abzukühlenden Guts vor. Die Vorrichtung umfasst eine Vakuumkammer mit mindestens einer Absaugöffnung und mindesten einem Vakuumpumpenanschluss. Weiterhin umfasst die Vorrichtung mindestens ein Mittel zur Rückgewinnung von Energie.

Die Vakuumkammer kann ausgelegt sein, um das Ein- und Ausladen des zu kühlenden Guts zu erleichtern, insbesondere über eine Rampe. Die Beschickung kann in einem Prozessschritt ablaufen, indem das zu kühlende Gut zum Beispiel auf einem Wagen direkt in die Vakuumkammer gerollt werden kann. Vakuumkammern, die geeignet sind, Kühlgut zu fassen, sind im Stand der Technik als solche bekannt.

Über eine Absaugöffnung, welche zusätzlich mit einem Ventil reguliert werden kann, ist mit einer Vakuumpumpe ein Unterdruck erzeugbar. Vakuumpumpen, die für die Ausübung der Erfindung geeignet sind, sind im Stand der Technik als solche bekannt.

Das Mittel zur Rückgewinnung von Energie ist zum Beispiel in der Lage, Energie aus dem Betrieb der Vorrichtung (Kälte- oder Wärmeenergie) in eine nutzbare Energieform umzuwandeln. Alternativ kann die Vorrichtung direkt an eine bestehende Wärme-Rückgewinnungsanlage oder an ein Boilersystem gekoppelt sein.

Die erfindungsgemässe Vorrichtung hat den Vorteil, dass die in dem zu kühlenden Gut enthaltene Wärmeenergie zu einem bedeutenden Anteil wieder nutzbar gemacht wird und nicht einfach als Abwärme an die Umgebung abgeleitet wird. Unter steigenden Energie- und Rohstoffkosten sind Effizienzgewinne hier besonders vorteilhaft. Auch der ökologische Aspekt eines Energiekreislaufs mit grösstmöglicher Ausbeute und die dadurch eingesparten Opportunitätskosten sind ein bedeutender Aspekt der vorliegenden Erfindung. Insgesamt wird die Energiebilanz der Vakuumkühlung positiv beeinflusst.

Die rückgewonnene Energie kann direkt im Produktionskreislauf weiterverwendet werden, oder, je nach Bedarf, anderen Anlagentechnischen Bedürfnissen zugeführt werden (zum Beispiel einem Boiler). Insbesondere kann die Energie direkt in den Einsatz der Wärme-/Kühlvorrichtung wieder verwendet werden. So kann zum Beispiel eine Wärmepumpe durch Zufuhr von Arbeit die Wärmeenergie für andere Zwecke nutzbar machen. Dies führt wiederum zu einer Abkühlung der im Kreislauf befindlichen Flüssigkeit.

Eine bevorzugte Ausführungsform der vorliegenden Erfindung sieht eine Vorrichtung vor, bei welcher das Mittel zur Rückgewinnung von Energie in der Lage ist, die aus dem Betrieb der Vorrichtung resultierende Energie, insbesondere Wärmeenergie wieder nutzbar zu machen.

Eine bevorzugte Ausführungsform der vorliegenden Erfindung sieht eine Vorrichtung vor, wobei mindestens ein Kondensator der Vakuumkammer nachgelagert ist.

Erfindungsgemäss kann ein Kondensator bereits durch Abkühlung des Wasserdampfes zu einer Verdichtung der aus der Vakuumkammer abgesogenen Luft dienen. Eine derartige Verdichtung unterstützt durch Komprimieren des Gases den Ansaugeffekt der Vakuumpumpe auf die Vakuumkammer. Somit ist es möglich, eine Vakuumpumpe mit geringerer Leistung einzusetzen. Kondensatoren sind im Stand der Technik als solche bekannt. Sie können mit Wasser, Luft oder Lösungsmittel gekühlt sein.

Bevorzugt ist eine Vakuumpumpe am Vakuumpumpenanschluss angeschlossen.

Vorzugsweise ist die Vakuumpumpe derart ausgelegt, dass ein Luftdruck in der Vakuumkammer von zwischen 1 und 100 mbar erzeugbar ist, besonders bevorzugt von zwischen 8 und 50 mbar. Über Ventile kann die Druckabsenkung in der Vakuumkammer gesteuert werden.

Es ist insbesondere möglich, den Druck sequenziell, zum Beispiel stufenweise abzusenken, nicht linear, zum Beispiel hyperbolisch; oder linear. Je nach Kühlgut kann die Auswahl der Druckabsenkung verschieden ausfallen. Zudem kann weiterhin ein Steuerelement oder Prozessor integriert sein, welcher den Ablauf der Druckabsenkung steuert. Eine Speichereinheit kann im Vorfeld kalibrierte oder abgespeicherte Druckabsenkungsverfahren nach Bedarf zur Verfügung stellen. Besonders bevorzugt wird eine oszillierende Druckabsenkung, das heisst gleichförmig und stufenweise.

Die Vakuumpumpe kann so ausgelegt sein, dass sie in der Lage ist, den Druck autonom zu modulieren, d.h. über die Saugleistung, und/oder mit Ventilen und Schleusen ausgestattet sein, welche den Druck regulieren.

Derartige Vakuumpumpen sind im Stand der Technik als solche bekannt. Für die vorliegende Erfindung besonders geeignete Vakuumpumpen kann der Fachmann nach Verbrauch, Leistung und Lebensdauer oder Wartungsintervalle, Integrierbarkeit ins Gehäuse etc. auswählen.

Bevorzugt ist die Vakuumpumpe mit einem Wärmetauscher versehen.

Beim Betrieb der Vakuumpumpe wird Abwärme erzeugt. Um diese Energie im Kreislauf beizubehalten, wird vorzugsweise ein Wärmetauscher besonders bevorzugt der Vakuumpumpe an- oder nachgelagert angebracht. Der Wärmetauscher ist vorzugsweise in der Lage, die Abwärme über einen Temperaturgradienten aus dem Betrieb der Vakuumpumpe an einen Gas/Wasserdampfkreislauf zu übertragen.

Bevorzugt ist der Wärmetauscher mit einem Kühlgerät verbunden.

Bevorzugt sind der Kondensator und der Wärmetauscher mit dem Kühlgerät verbunden.

Bevorzugt ist eine Mischvorrichtung zwischen dem Kondensator und dem Kühlgerät und dem Wärmetauscher und dem Kühlgerät angebracht.

Besonders bevorzugt ist der Gas/Wasserdampfkreislauf ein geschlossenes System. Kondensator, Wärmetauscher und Kühlgerät setzen dabei die kalten/warmen Ströme jeweils um.

Eine bevorzugte Ausführungsform der vorliegenden Erfindung sieht eine Vorrichtung vor, wobei das Mittel zur Rückgewinnung von Energie eine Wärmepumpe ist.

Vorzugsweise ist die Wärmepumpe zwischen dem Kondensator und dem Wärmetauscher direkt an das Kühlgerät angeschlossen.

Eine bevorzugte Ausführungsform der vorliegenden Erfindung sieht eine Vorrichtung vor, die zur Vakuumkühlung von Backgut ausgelegt ist.

Die beschriebene Vorrichtung ist insbesondere geeignet, um Backgut abzukühlen. Andere Anwendungsbereiche erschliessen sich allerdings dem Fachmann ebenfalls durch die hier dargestellte Erfindung. So kann durchaus eine Kühlung von Lebensmittel im Allgemeinen mit der erfindungsgemässen Vorrichtung erfolgen. Im Besonderen ist die Kühlung von Gemüse, Obst, Käse, Fleisch oder anderen Frischprodukten denkbar. Auch ist die erfindungsgemässe Vorrichtung geeignet um Lebensmittel zu kühlen bei denen ein Trocknungsnebeneffekt erwünscht ist, wie zum Beispiel Teigwaren

Ein weiterer Aspekt der vorliegenden Erfindung betrifft ein Verfahren zur Vakuumkühlung mit den folgenden Schritten: 1) zu kühlendes Gut mit einer Temperatur von ca. 80 °C bis ca. 105 °C wird in eine Vakuumkammer gebracht; 2) die Vakuumkammer wird mit Unterdruck beaufschlagt; 3) Die Reduktion des Druckes wird bei einer Temperatur der Backware von ca. 0 °C bis ca. 50 °C, insbesondere 20 °C bis ca. 30 °C, gestoppt; 4) Die der Backware entzogene Wärme wird einem Mittel zur Rückgewinnung von Energie zugeführt. Insbesondere kann das zu kühlende Gut Backgut sein.

Die Endtemperatur und das Druckabsenkungsverfahren sind im Detail von dem zu kühlenden Gut, sowie vom beabsichtigten nächsten Prozessschritt abhängig.

In einer besonders bevorzugten Ausführungsform wird die Vakuumkammer über ein Ventil mit Unterdruck beaufschlagt.

Die aus der Wärmepumpe gewonnene Energie, insbesondere Wärmeenergie kann wieder genutzt werden.

Erfindungsgemäss ausgeübt ist mit dem beschriebenen Verfahren Energie zu mindestens 50% regenerierbar, bevorzugt wird dabei mindestens 60% der Energie regeneriert, besonders bevorzugt bis zu 75%.

Eine bevorzugte Ausführungsform der vorliegenden Erfindung zeigt ein Verfahren, wobei bei dem Beaufschlagen mit Unterdruck heisses Gas mit Wasserdampf aus der Vakuumkammer gesaugt wird, welches über einen Kondensator zumindest teilweise abgeschieden wird.

Hierbei wird besagtes Gas zudem in dem Kondensator verdichtet durch Verflüssigung.

Die Erfindung wird anhand der folgenden Beispiele und Zeichnungen zu den bevorzugten Ausführungsformen näher erläutert.

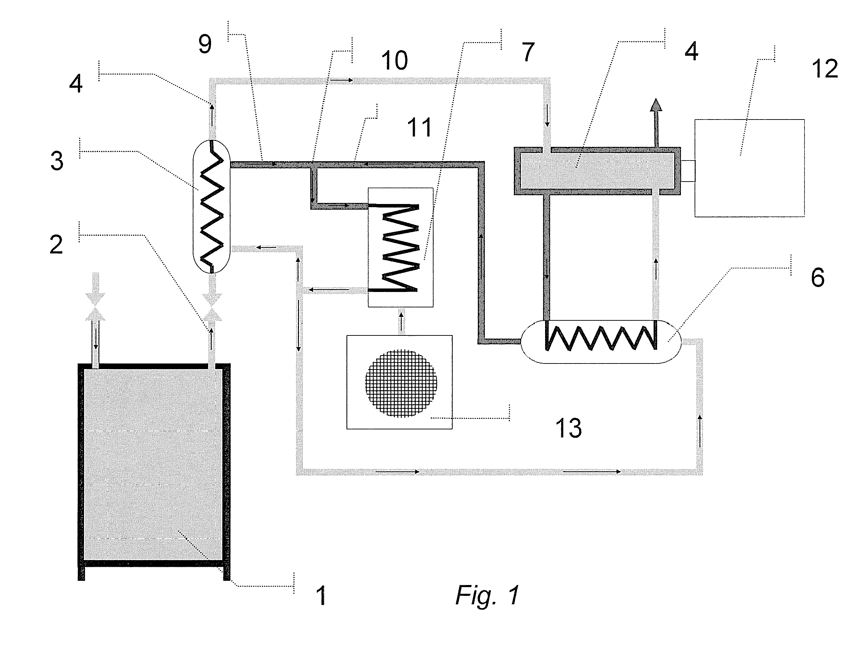

Fig. 1 zeigt eine schematische Darstellung des Energiekreislaufs und der beteiligten Komponenten.

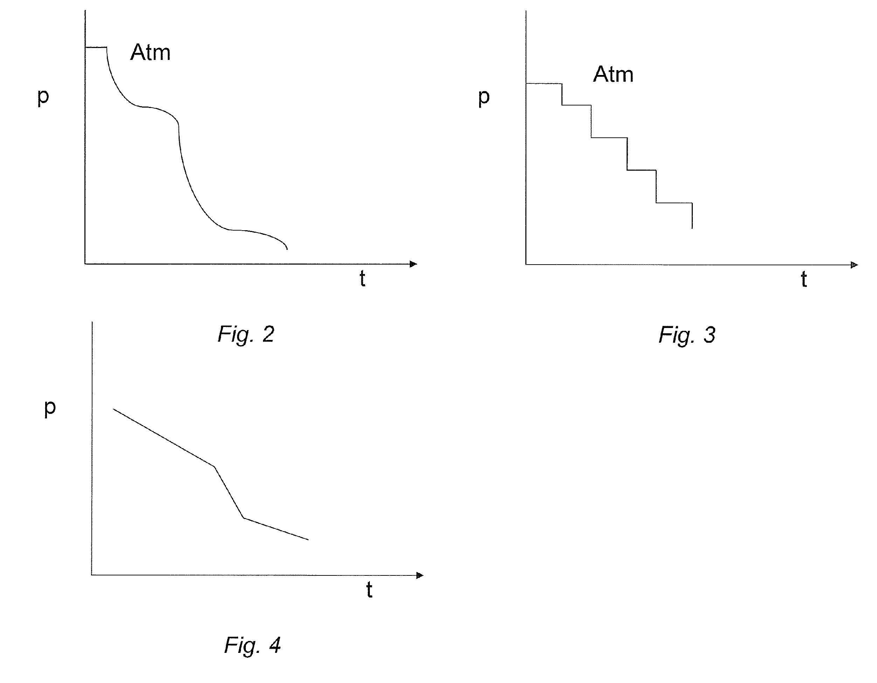

Fig. 2 zeigt qualitativ eine zweistufig hyperbolische Druckabsenkungskurve.
Fig. 3 zeigt qualitativ eine stufenweise lineare Druckabsenkungskurve.
Fig.4 zeigt qualitativ eine stufenweise variable Druckabsenkungskurve.

Ausgehend von einem Atmosphärendruck kann der Druck auf einen Enddruck über ein dem Produkt angepasstes, vorkalibriertes Verfahren gesenkt werden. Der Enddruck wird zum Beispiel von der Zieltemperatur bestimmt.

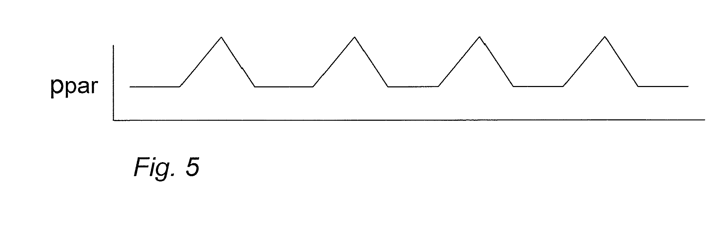

Fig. 5 zeigt schematisch den Verlauf des auf das Ventil ausgeübten Ansaugdruckes durch eine oszillierende Druckabsenkung. Erfindungsgemäss wird eine oszillierende Druckabsenkung mittels Öffnen und Schliessen des Ventils bewerkstelligt. In dem aufgeführten Beispiel (Fig. 5) wird die Oszillation anhand der Druckpeaks Ppar auf das geschlossene Ventil gezeigt. Alternativ kann die Oszillation kann mittels An- und Ausschalten der Vakuumpumpe geschehen.

Zweck der Vakuumkühlanlage ist das Kühlen von Lebensmitteln durch Erzeugung eines Unterdruckes (Vakuum) und die Energierückgewinnung der aus dem Kühl- sowie vorlaufenden Prozesses anfallenden Energie.

Dazu wird das Produkt in die Vakuumkammer 1 gefahren. Die Kammer wird abgedichtet. Ein entsprechendes dem Kühlgut angepasstes Kühlprogramm wird ausgewählt. Die Steuerklappe gibt einen bestimmten Querschnitt des Ansaugrohres 2 frei, wodurch die Vakuumkammer 1 evakuiert werden kann. Um das Produkt schonend zu kühlen, wird die Klappe oszillierend gesteuert. Der Druck in der Kammer folgt der vorgewählten Kurve.

Bei der Evakuierung der Vakuumkammer 1 wird dem Kühlgut Verdunstungsenergie entzogen. In dem auf circa 7°C gekühlten Kondensator 3 wird der Abluft Energie durch Kondensation des Dampfes entzogen. Das auskondensierte Wasser wird über einen gesonderten Wasserbehälter aus dem Vakuum geschleust.

Die Restluft 4 verlässt den Kondensator und gelangt zur Vakuumpumpe 5. Die Pumpe wird dabei durch einen Wärmetauscher 6 auf Betriebstemperatur gehalten und mit einem Elektromotor 12 betrieben.

Durch ein Kühlgerät 7 wird der Kondensator mit ca. 5°C kühler Flüssigkeit 8 versorgt. Das Kühlgerät 7 versorgt ebenso den Wärmetauscher 6. Aus dem Kondensator 3 strömt nach dem Abscheiden der Flüssigkeit aus der Abluft Flüssigkeit 9 mit einer Temperatur von ca. 12°C wieder zurück zum Kühlgerät 7. Über ein Mischventil 10 wird diese mit der erwärmten Flüssigkeit 11 des Wärmetauschers gemischt und dem Kühlgerät 7 zugeführt.

Das Kühlgerät 7 ist im vorliegenden Ausführungsbeispiel mit einer Wärmepumpe 13 verbunden.

Ist der Prozess beendet, hat das Produkt seine Soll- Temperatur erreicht. Die Kammer wird nun automatisch über eine Filteranlage mit Luft oder Schutzgas geflutet. Sobald in der Kammer atmosphärischer Druck erreicht ist, kann die Türe wieder geöffnet werden und das Produkt zur Weiterverarbeitung entnommen werden.

Wird Backgut mit zum Beispiel 98°C Temperatur mit dieser Vorrichtung nach dem beschriebenen Verfahren auf 24°C gekühlt, so lässt sich energetisch 75% der im Kühlgut ursprünglich enthaltenen Energie zurückgewinnen.

Die leere Vakuumkammer steht nun für den nächsten Prozess zur Verfügung.

Für das folgende Beispiel wurden folgende Komponenten von den folgenden Herstellern verwendet:

| | |
|---|---|
| Vakuum-Pumpe: | z.B. Eine Drehschieber-Vakuumpumpe mit einem konstanten Vakuum, welche im Hochtemperaturbereich arbeitet. |
| Kühlgerät: | HATAG Handel und Technik AG Rörswilstrasse 59 3065 Bolligen |
| Kondensatabscheider: | Permamotion AG Gotthardstrasse 20 6300 Zug |
| Kondensatabfluss: | Permamotion AG Gotthardstrasse 20 6300 Zug |
| Belüftungsventil und Regelventil: | EBRO ARMATUREN Est. + Co. KG Gewerbestr. 5 CH-6330 Cham |

Nachfolgend wird anhand eines Beispiels die aus dem Betrieb einer erfindungsgemäßen Vorrichtung Zurückgewonnene Energie ausgerechnet. Exemplarisch wird ein Blech mit 40 Broten zu je 0.11 kg beladen. Insgesamt werden zwölf solcher Bleche pro Stikken angenommen. Aus dem Betrieb der Pumpe wird mit einem Wirkungsgrad von 75 % der Kühlung eine verfügbare Energie pro Betriebsstunde von 8.25 kWh erreicht. Die Masse der Brote wird bei einem Wasserverlust von 5%, somit einem Wassergewichtsanteil von 2.64 kg mit der spezifischen Verdunstungsenergie von Wasser eine Verdunstungsenergie pro Kühltakt von 1.65 kWh erreicht. Zuzüglich der aufgewendeten Sublimationsenergie pro Kühltakt (Angenommen sind 12 Takte/h), ergibt dies bei einem Wirkungsgrad des Wärmetauschers von 85 % 25.25 kWh. Der Betrieb zweier maximal ausgelasteter Anlagen hätte eine Kapazität zur Rückgewinnung von 1071,84 kWh.

**Beispiel**

| Engergierückgewinnung bei max. Durchsatz | | | |
|---|---|---|---|
| | | Ermittlung der Gebäckmasse | |
| Masse Gebäck pro Stikken: | 53 kg | Stückgewicht: | 0,110 kg |
| Kühlzykluszeit: | 240 sec. | Stückz+ahl auf Blech: | 40 Stk. |
| Leerzeit (Be-/Entladen): | 60 sec. | Blechzahl pro Stikken: | 12 Stk. |
| ∅-Durchsatz Stdl.: | 634 kg/h | | 52,800 kg |
| | | | |
| **Energieanteil H₂O** | | **Energieanteil aus Pumpe** | |
| spez. Verdunstungsenergie von Wasser: | 2250,00 kJ/kg | ∅ Energiebedarf der Pumpe UV16: | 11,00 kWh |
| Tatsächlicher Wasserverlust im Gebäck bei | | | |
| Vakuumkühlung: | 5 % | | |
| Wassergewichtsanteil beim Vakuumkühlen: | 2,64 kg | | |
| Verdunstungsenergie pro Kühltakt bei Vollem | | Voraussichtlich erreichbarer Wirkungsgrad der | |
| Stikken: | 5940,00 kJ | Kühlung: | 75,00 % |
| | → 1,65 kWh | | |
| Ben. Sublimationsenergie* pro Kühltakt (ca.50% v. | | (Keine Sublimationsenergie nötig, da | |
| Qᵥ): | 2970,00 kJ* | Energieniveau auf ca. 100-120°C.) | |
| | → 0,83 kWh | | |
| Wirkungsgrad eines Wärmetauschers: | 85 % | - | |
| Max. Taktzahl pro Stunde: | 12 T./Std. | | |
| Tageslaufleistung: | 16,0 Std. | | |
| | | | |
| **Mögliche Energierückgewinnung je Anlage und Tag:** | | | |
| Reell verfügbare Energie pro Betriebstd.: | **→ 25,25 kWh** | Reell verfügbare Energie pro Betriebstd.: | **→ 8,25 kWh** |
| Reell verfügbare Energie pro Betriebstag: | **→ 403,92 kWh** | Reell verfügbare Energie pro Betriebstag: | **→ 132,00 kWh** |

## Patentansprüche

1. Vorrichtung zur Vakuumkühlung eines abzukühlenden Guts, umfassend eine Vakuumkammer mit mindestens einer Absaugöffnung und mindestens einem Vakuumpumpenanschluss, **dadurch gekennzeichnet dass** die Vorrichtung mindestens ein Mittel zur Rückgewinnung von Energie umfasst.

2. Vorrichtung gemäss Anspruch 1, **dadurch gekennzeichnet, dass** das Mittel zur Rückgewinnung von Energie dergestalt ausgelegt ist, dass die aus dem Betrieb der Vorrichtung resultierende Energie, insbesondere Wärmeenergie, wieder genutzt werden kann.

3. Vorrichtung gemäss einem der Ansprüche 1 oder 2, wobei mindestens ein Kondensator der Vakuumkammer nachgelagert ist.

4. Vorrichtung gemäss einem der Ansprüche 1 bis 3, wobei eine Vakuumpumpe am Vakuumpumpenanschluss angeschlossen ist.

5. Vorrichtung gemäss Anspruch 4, wobei die Vakuumpumpe mit einem Wärmetauscher versehen ist.

6. Vorrichtung gemäss Anspruch 5, wobei der Wärmetauscher mit einem Kühlgerät verbunden ist.

7. Vorrichtung gemäss Anspruch 6, wobei der Kondensator und der Wärmetauscher mit dem Kühlgerät verbunden sind.

8. Vorrichtung gemäss Anspruch 7, wobei eine Mischvorrichtung zwischen dem Kondensator und dem Kühlgerät und dem Wärmetauscher und dem Kühlgerät angebracht ist.

9. Vorrichtung gemäss einem der Ansprüche 1 bis 8, wobei das Mittel zur Rückgewinnung von Energie eine Wärmepumpe ist.

10. Vorrichtung gemäss einem der Ansprüche 1 bis 9, wobei die Vorrichtung zur Vakuumkühlung von Backgut ausgelegt ist.

11. Verfahren zur Vakuumkühlung, insbesondere mit einer Vorrichtung gemäss Anspruch 1, **dadurch gekennzeichnet, dass**
a. Kühlgut, insbesondere Backgut, mit einer Temperatur von ca. 80 °C bis ca. 105 °C in eine Vakuumkammer gebracht wird;
b. Besagte Vakuumkammer mit Unterdruck beaufschlagt wird;
c. Der Unterdruck bei einer Temperatur der Backware von ca. 0 °C bis 50 °C, insbesondere 20 °C bis ca. 30 °C, gestoppt wird;
d. Die dem Kühlgut, insbesondere Backgut, entzogene Wärme einem Mittel zur Rückgewinnung von Energie zugeführt wird.

12. Verfahren gemäss Anspruch 11, **dadurch gekennzeichnet dass** bei dem Beaufschlagen mit Unterdruck heisses Gas mit Wasserdampf aus der Vakuumkammer gesaugt wird, welches über einen Kondensator zumindest teilweise abgeschieden wird.

13. Verfahren gemäss Anspruch 10, **dadurch gekennzeichnet dass** besagtes Gas zudem in einem Kondensator verdichtet wird.

14. Verfahren gemäss einem der Ansprüche 11 bis 13, **dadurch gekennzeichnet, dass** besagte Vakuumkammer durch ein Ventil Unterdruck mit beaufschlagt wird.

15. Verwendung eines Mittels zur Rückgewinnung von Energie, insbesondere einer Wärmepumpe, in einem Verfahren zur Vakuumkühlung, insbesondere von Backwaren.
